# EUROPEAN PATENT APPLICATION

(11) **EP 1 388 377 A1**
(43) Date of publication of application: **11.02.2004**
(21) Application number: 02017939.6
(22) Date of filing: 09.08.2002
(51) Int. Cl.: B09B 5/00, E05B 47/00

(54) **Fastening arrangement, article, method of releasing a fastening arrangement, and method of at least partially disassembling an article**

(71) Applicant: Sony International (Europe) GmbH, 10785 Berlin (DE)
(72) Inventor: Kemp, Thomas, c/o Adv.Techn.Ctr.Stuttgart, 70327 Stuttgart (DE); Bodenhöfer, Karl, c/o Adv.Techn.Ctr.Stuttgart, 70327 Stuttgart (DE)
(74) Representative: Müller - Hoffmann & Partner

(57) **Abstract**

A fastening arrangement is proposed, comprising a locking unit (3) and a fastening unit (4), wherein said locking unit (3) and said fastening unit (4) are adapted to mechanically hold and lock each other in a first or assembly state or condition and to release each other in a second or disassembly state or condition. According to the invention a radio frequency receiving unit (2) is provided, said radio frequency receiving unit (2) being adapted to receive a disassembly radio signal, said locking unit (3) and/or said fastening unit (4) being adapted to change from said first or assembly state or condition to said second or disassembly state or condition upon receipt of a disassembly radio signal by said radio frequency receiving unit (2), so as to enable a process of release between said locking unit (3) and said fastening unit (4).

## Description

The present Invention relates to a fastening arrangement, to an article according, to a method of releasing a fastening arrangement, and to a method of at least partially disassembling an article.

More particular, the present invention relates to a fastening arrangement comprising and/or realizing an unlocking mechanism to facilitate an automated recycling of devices and comprising a locking unit and a releasable fastening unit, wherein the locking unit releases the fastening unit in response to a disassembly condition. The invention relates further more particular to an article showing a fastening arrangement, a method of releasing a fastening arrangement and a method of active disassembling articles.

Increasing legislative requirements concerning deposition and recycling of electronic devices ("Take Back Legislation") makes it obligatory for manufacturers of electronic devices, especially of consumer electronics and household appliances, to provide easy disassembling of electronic devices at the end of product life. An easy disassembly facilitates separating different fractions of material. For limiting the cost of recycling, an automated process for disassembling of electronic goods is aimed by manufacturers and recycling services.

Besides robotic disassembly, a well-known approach to the problem of high disassembly cost is the implementation of active disassembly functions into electronics products. Active disassembly functions are activated without directed human or robotic action loosing thereby their fastening properties.

A common example for active disassembly functions is known as active disassembly using smart materials (ADSM) as disclosed in GB2320277A (J. D. Chiodo, E. Billet). ADSM is a disassembly technique showing reduced recycling cost by avoiding the need for product specific disassembly lines or manual disassembly. ADSM is especially suitable for small and medium sized devices. As for small and medium sized devices a manual or robotic disassembly is not cost effective, the most common approach for separating different fractions is a shredder step.

In devices designed for ADSM, conventional fasteners as clips, screws, cramps or snap fasteners are replaced by their ADSM-equivalents. ADSM fasteners show, for example, a plug of shape memory alloy (SMA) attached to a metal block. Before activation (triggering) of the ADSM fastener, the plug blocks a fastening unit. A disassembly is activated by thermal energy applied to the device-to-be-disassembled (DTBD) either by convection, conduction or induction heating or by microwave or infrared radiation. Due to the shape memory effect of the SMA, the length of the plug diminishes, releasing thereby the fastener unit when the temperature of the plug exceeds a trigger temperature of the ADSM fastener.

By grading the trigger temperature and by coordinating graded trigger temperature levels with different levels of disassembly, ADSM enables a controlled, successive disassembly of electronic devices showing more than two components to be separated.

Regarding the main draw backs of ADSM as state of the art for active disassembly of devices, first of all a high demand for energy is evident.

The high demand of energy results in parts from the basic requirement that a disassembly temperature must be selected higher than an operating temperature of the device, in particular at the highest specified ambient temperatures.

Additionally, for heating the ADSM fasteners up to their trigger temperature, e.g. by convection heating, the whole device must be heated up, wherein the device dissipates thermal energy and heating time is prolonged.

Another draw back of ADSM is a missing feedback from a released fastener. Due to product deviations, aging, dirt and differing conditions for heating conduction, the moments of release of a plurality of ADSM fasteners deviate from each other. For ensuring the release of all of a plurality of ADSM fasteners, the heating process has to be significantly prolonged.

Further, a minimum and a maximum temperature limit a permissible range for graded trigger temperatures for different levels of disassembly. The minimum temperature results form the operating temperature of the device at the highest specified ambient temperature. The maximum temperature is determined by significant setting at the product resulting in blocking of the fastening elements or in contamination of fractions.

As, in addition, not all parts or components of a device show the same temperature during the heating up period, the pitch of the trigger temperatures must be selected high enough to ensure proper order of release of the fastening arrangements, resulting in a restricted number of disassembly levels.

It is an object of the present invention to provide a fastening arrangement for active disassembly showing low energy consumption, feedback possibilities and high variability. It is another object to provide an article assembled of a plurality of parts or components, wherein the parts are connected to one another by fastening arrangements for active disassembly showing low activation energy, feedback possibilities and high variability. Further objects of the present invention are to provide a method for releasing a fastening arrangement and a method for active disassembly.

This object is achieved by the inventive fastening arrangement as specified in claim 1. The object is further achieved by an article assembled by means of the inventive fastening arrangement which is specified in claim 21. An inventive method of releasing an inventive fastening arrangement is specified in claim 24. An inventive method of at least partially disassembling an article is specified in claim 25. Advantageous embodiments of the inventive fastening arrangement, the inventive article and the inventive method for at least partially disassembling an article are specified in the respective dependent sub-claims, respectively.

Known fastening arrangements comprise a locking unit and a fastening unit, wherein said locking unit and said fastening unit are adapted to mechanically hold and lock each other, in particular said fastening unit by said locking unit, in a first or assembly state or condition and to release each other, in particular said fastening unit from said locking unit, in a second or disassembly state or condition.

The inventive fastening arrangement is characterized in that a radio frequency receiving unit is provided, that said radio frequency receiving unit is adapted to receive a disassembly radio signal, that said locking unit and/or said fastening unit are adapted to change from said first or assembly state or condition to said second or disassembly state or condition upon receipt of a disassembly radio signal by said radio frequency receiving unit, so as to enable a process of release between said locking unit and said fastening unit.

A fastening arrangement is preferred, wherein said radio frequency receiving unit at least partly constitutes said locking unit.

It is further preferred, that said radio frequency receiving unit at least partly constitutes said fastening unit.

Said radio frequency receiving unit is or comprises a resonant circuit, in particular comprising at least a coil and a capacitor according to a further embodiment of the invention.

In the fastening arrangement according to the invention a process of release between said locking unit and said fastening unit can be enabled by increasing the mobility or movebility between said locking unit and said fastening unit.

Preferably, in said first or assembly state or condition said locking unit and said fastening unit are locked to each other at least in part by form closure.

Alternatively or additionally in said first or assembly state or condition said locking unit and said fastening unit are locked to each other at least in part by frictional connection.

A process of release between said locking unit and said fastening unit can be enabled by changing cooperating forms between said locking unit and/or said fastening unit.

Alternatively or additionally, a process of release between said locking unit and said fastening unit can be enabled by changing ductile and/or elastic properties of said locking unit and/or said fastening unit.

To do so, heating means may be provided for heating said locking unit and said fastening unit upon receipt of said disassembly radio signal.

Said heating means may be powered by said radio frequency receiving unit.

Said heating means may be a part of said radio frequency receiving unit.

Said heating means may be adapted to realize resistive heating.

The inventive fastening arrangement in particular shows a radio frequency receiving unit for receiving a disassembly radio signal as a disassembly condition. Receiving the disassembly radio signal the radio frequency receiving unit activates a locking unit of the fastening arrangement. By activation, the locking unit releases a fastening unit of the fastening arrangement.

As only the fastening arrangement may dissipate the power of a disassembly radio field the demand for energy for releasing the inventive fastening arrangement may be reduced compared to ADSM fasteners.

Further, as the disassembly radio signal is received by the fastening arrangement almost without any delay, the response time between start of disassembly and release of the fastener unit is minimized.

Advantageously, the radio frequency receiving unit is a resonant circuit, comprising a coil and a capacitor. A resonant circuit absorbs energy from a radio field showing the resonance frequency. The absorbed energy then can be used to supply an electronic circuit or to unlock the locking unit.

In addition, a resonant circuit represents a particularly low cost and rugged realization of a radio frequency receiving unit.

This results also from the fact that, up to a certain degree, the radio frequency receiving unit is similar to a receiving unit of widely spread radio frequency tags (RF-tags). RF-tags are electronic tags transmitting information to an exciter system after activation by the exciter system. Product identification by means of RF-tags is a rugged and low-cost technique available in a multitude of varieties for a wide range of applications. An adaptation of radio frequency receiving units for the fastening arrangement to an application can make use of the experience in RF tags.

The resonant circuit forms an electrical oscillator showing a single resonance frequency. The oscillator is excited by the disassembly radio signal received by an antenna. If the frequency of the disassembly radio signal matches the resonance frequency, the resonating oscillator absorbs a high amount of energy from the disassembly radio field transmitting the disassembly radio signal.

According to an advantageous embodiment of the invention, the absorbed energy is used to deactivate the radio frequency receiving unit by a circuit breaker, as for example a fuse, after release of the fastening unit. As the deactivated radio frequency receiving unit absorbs no longer energy from the disassembly signal field, a released fastening arrangement is detectable by the missing of a damping of or in the disassembly radio field.

In a further advantageous embodiment of the inventive fastening arrangement, the energy absorbed from the disassembly radio field by the oscillator is also used to unlock the locking unit. Thereby the current flow through the resonant circuit may be interrupted and substantially at the same time releasing the fastening unit. As soon there is no contact any more no energy can be dissipated from the RF field resulting in a safe state of the fastening element.

Advantageously the locking units a plug consisting of electrically conductive material, whereby the plug is pushed/blown and/or removed by the current flow in the radio frequency receiving unit.

As for RF-tags, on principle, the radio frequency receiving unit for the inventive fastening arrangement can be of active type or passive type. While an active type is equipped with a storage unit and requires less activation energy applied by the disassembly radio field, the passive type is fully supplied by the received radio signal.

A release of the fastening arrangement is necessary either in case of service or in case of disassembly at the end of product life. In case of service, a source of the disassembly radio signal can be placed manually close to the radio frequency receiving unit. Disassembly at the end of product life takes usually place at suitable locations, where a strong radio field is available. On the other hand, an unintentional, accidental release of the fastening unit by radio sources must be avoided. Thus, advantageously, the radio frequency receiving unit is passive to reduce cost and to avoid an undesired release of the fastening arrangement by ambient radio sources emitting a radio signal of the disassembly frequency with a compared to the disassembly radio signal low power level.

To avoid undesired release and also for reducing the necessary energy of a disassemble radio field, the radio frequency receiving unit is capable of receiving radio frequencies in the range of 100MHz to 300 MHz. (Radio fields of ambient radio sources in this frequency range are showing typically low power. As a consequence, the trigger level of a disassembly radio frequency signal can be selected low compared to other frequency ranges.

Another advantageous method for avoiding unintended release of the fastening arrangement is a security lock unit, wherein the security lock unit disables releasing of the fastening unit and/or sensing of the disassembly condition before being unlocked. A simple example for a security lock is a second resonant circuit, showing a second resonance frequency that differs from that of the first resonant circuit. Both resonant circuits are arranged functional in series. As a consequence, the fastening unit is released only when the fastening arrangement is exposed to both a disassembly radio signal and a security unlock signal.

Whereas the invention is aimed at active disassembly of electronic devices, mainly for consumer electronics and household appliances, the invention is applicable for any kind of articles, comprising at least two parts or components, wherein after end of product life or for service operations a separation of the parts or components is desirable. Especially for the assembly of articles, as for example parts of automobiles, showing parts made either of toxic or valuable materials the inventive fastening arrangement is suitable.

Thus a further object of the invention is to provide an article assembled of at least first and second parts, the first and second parts being connected by means of fastening arrangements, wherein at least one fastening arrangement is releasable in response to a disassembly radio signal.

Advantageously, the article shows also separation units, pushing apart the first and the second parts of the article after release of the fastening arrangements. As a consequence, after exposure of the article to the disassembly radio signal, the article disintegrates automatically, allowing a fully automated disassembly and separation process. The separation units can be realized in known manner by mechanical springs, by pressure gradient, chemically or hydraulically.

According to another advantageous embodiment of the inventive article, the article shows at least first and second fastening arrangements, the first fastening arrangement being sensitive to a first disassembly radio signal and the second fastening arrangement being sensitive to a second disassembly radio signal, allowing sequential disassembly of the article. A sequential disassembly makes feasible a fully automated disassembly of complex articles showing a multitude of parts or components to be separated at the end of product life.

Another object of the invention is to provide a method of releasing a fastening arrangement, comprising exposure of the fastening arrangement to a disassembly radio signal, thereby triggering a release of the fastening unit of the fastening arrangement.

Compared to known methods of heating up fastening arrangements to release them, the inventive method is faster, more selective and consumes less energy.

A further object of the invention is to provide a method of that least partially disassembling an article showing fastening arrangements, comprising exposure of at least one fastening arrangement of the article to a disassembly radio signal, thereby triggering a release of the fastening arrangement and at least a partial detachment of a first part from a second part of the article. Whereas known methods of active disassembly consume both energy and time, the inventive method operates with reduced delay between the start of a disassembly step and detachment of the parts or components to which the disassembly step is referred. Limitation by size and cost of the fastener and its ability to absorb energy are enhanced.

By an advantageous integration of a separation step following a detachment step in a disassembly step, exposure of the article to the disassembling radio signal forces a detachment and an automatic separation of the different parts relative to each other. A combination of automatic detachment and automatic separation drastically reduces the disassembly time. As the time for disassembling contributes significantly to the deposing and recycling costs, the field of application of active disassembly is enlarged.

According to an advantageous embodiment of the inventive method, an article to be disassembled is exposed in succession to at least two different disassembly radio signals whereby a successive disassembly of the article is caused.

In comparison to known methods of heating up articles showing ADSM fasteners to a plurality of trigger temperatures for achieving a successive disassembly of parts of the article the inventive method shows a far higher variability. First of all, the number of useable trigger frequencies and/or signal levels is far greater than that of useable and distinct and/or distinguishable temperature trigger levels. In addition, the trigger signals can be applied at the article in any succession, whereas the temperature trigger levels can only be headed in upward direction.

Another advantageous embodiment of the inventive method makes use of the fact that a radio frequency receiving unit of the fastening arrangement absorbs in measurable degree power from the disassemble radio field as long as the fastening unit is unreleased and absorbs significantly less power after release. By detecting and/or measuring a damping of or in the radio field at each disassembly frequency the proceeding and progress of disassemble process can be monitored and controlled. As for example a resonance circuit or oscillator in the radio frequency receiving unit damps the radio field at the resonance frequency, the released/unreleased state of the fastening arrangement is easily detectable.

Due to dirt, manufacture deviations and/or aging, the sensitivity of the radio frequency receiving unit and the electrical power, necessary to unlock the locking unit of the fastener elements, differ from each other. For methods lacking a possibility for detecting the released/unreleased state of the fastening arrangement the time of exposure to the disassembly condition must be selected high enough to ensure a proper release of all fastening arrangements under worst-case conditions.

According to an advantageous embodiment of the invention, however, a processing step of applying a disassemble radio signal is terminated by detecting and/or measuring an absence of a damping of or in the disassembly radio field at the applied disassembly frequency.

According to a further advantageous embodiment of the invention, the power of the disassemble radio signal is increased, e.g. up to a maximum level, as long as the disassemble radio field is damped. In this way, disturbing effects of dirt and aging as well as manufacture deviations are compensated in a timesaving manner.

Advantageously the inventive method of disassembling articles includes a classifying step, classifying the articles disassembled and/or to be disassembled by exposing them to a disassembly radio field of variable frequency, sensing or probing the damping at selected disassembly frequencies and correlating the pattern of damped and non-damped disassembly frequencies with an identification table, wherein the identification table relates every pattern to a class of article.

Classifying occurs either before disassembling, whereby sensing or probing takes place with a low level probe radio signal that does not trigger the fastening arrangement, to classify the article before disassembly. Thus the disassembly process is adaptable to the article. A probing during disassembly, however, allows, for example, a correlation between classes of detached parts with a trigger (release) frequency.

In the following, the invention will be explained using a schematic drawing and by way of examples.

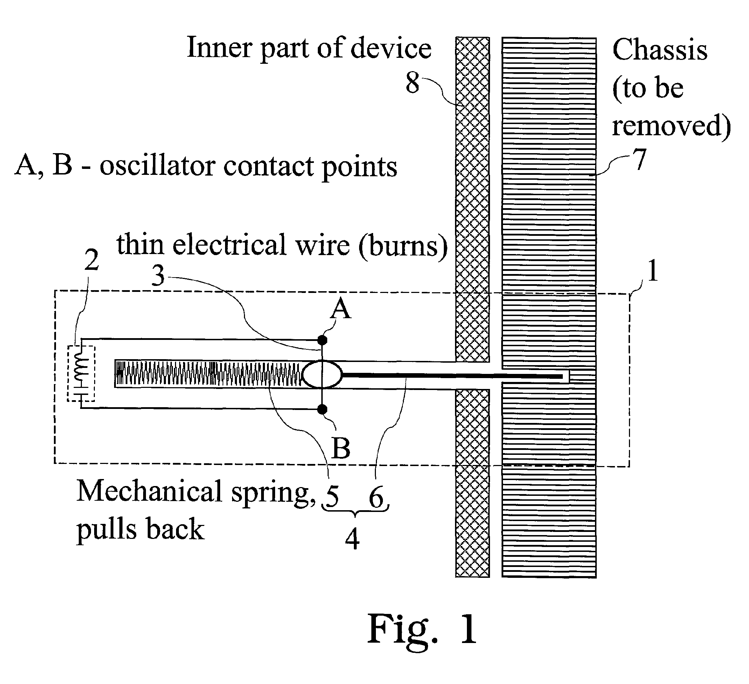

- **Fig. 1**: is a schematic block diagram of an example of an inventive fastening arrangement.

Referring to Fig. 1, a fastening arrangement 1, fixing a chassis 7 to an inner part of device 8, comprises a radio frequency receiving unit 2, a locking unit 3, and a fastening unit 4, wherein the fastening unit 4 comprises a spring 5 and a bolt 6. The radio frequency receiving unit 2 consists of a resonant circuit. The resonant circuit is electrically interrupted between contact element A and contact element B.

Between the contact elements A and B the locking unit 3 is arranged, wherein the locking unit 3 is a plug or a piece of thin wire of electrically conductive material. In the unreleased state of the fastening arrangement, the locking unit 3 closes electrically the resonant circuit. Additionally, the locking unit 3 blocks contraction of spring 5.

Being exposed to a disassembly radio signal showing a disassembly frequency matching the resonance frequency of the resonant circuit, the radio frequency receiving unit 2 absorbs energy from the disassembly radio field at the resonance frequency. The energy absorbed by the resonant circuit causes a current flow through the resonant circuit. The current flows through the locking unit 3. If the current flow through the locking unit 3 is sufficient for blowing the locking unit 3 in the manner of an electrical fuse, the spring 5 is released and pulls back releasing thereby bolt 6. Thereby the Chassis 7 is detached from the inner part 8.

### Example 1:

The housing of an electrical equipment, product or appliance is fastened by a set of cramps. The cramps are realized as radio frequency cramps (RF cramps) being releasable by exposure to a first disassembly radio signal of 200 MHz. E.g. the printed board of the electrical appliance is attached to a main board by means of radio frequency connectors (RF connectors), being releasable by exposure to a second disassembly radio signal of 220 MHz. Other components or parts of the electrical appliance can be connected to the housing or the main board by sets of RF connectors, whereby each set is sensitive to any of a plurality of disassembly radio frequencies.

To disassemble the electrical appliance, first the disassembly radio signal of 200 MHz is applied. The RF cramps showing a trigger frequency of 200 MHz are released, whereas the other RF connectors remain unreleased. The housing of the electrical appliance is dismantled. By manual or robotic action the parts of the housing are removed from the place of exposure and the remaining portion of the electrical appliance. Then the remaining portion of the electrical appliance is exposed to the second disassembly signal of 220 MHz, disconnecting the tube from the main board. The process will be repeated with other disassembly frequencies until all parts fixed by any kind of RF-fasteners are detached. Thereby not every step of exposure must be followed directly by a step of removal of detached parts.

### Example 2:

The effect of damping in or of a radio field by an oscillator in its vicinity is exploited. A radiation generator detects the existence of any oscillator dissipating energy in its vicinity, because it is damped and will consume more power. The enlarged power consumption can easily be measured. As the measurement is easier if the frequency of the generator is changed from a non-resonance frequency to a resonance frequency, the frequency of a radiation generator is tuned from, for example, 199 MHz to 200 MHz, wherein 200 MHz is the resonance frequency of RF-fasteners in vicinity of the radiation generator. If the RF fasteners stop absorbing energy after being released, then any still unreleased RF fastener is detectable by the damping in or of the disassembly radio field. By detecting still resonating oscillators dissipating energy from the disassembly radio field at the disassemble frequency, any still unreleased fastening arrangement can easily be detected.

### Example 3:

In example 3 the effect of damping of or in a radio field by fastening arrangements showing resonant circuits of different resonance frequencies is exploited for classifying a device to be disassembled. A electrical appliance of class A is assembled by use of three different types of fastening arrangements, wherein the first type shows a trigger frequency of 200 MHz, the second type a trigger frequency of 220 MHz and the third type a trigger frequency of 230 MHz. A electrical appliance of class B is assembled by use of fastening arrangements of the first type (200 MHz), the third type (230 MHz) and a forth type, showing a trigger frequency of 210 MHz. The electrical appliances can easily be classified and discriminated against each other by applying the four trigger frequencies (200 MHz, 210 MHz, 220 MHz and 230 MHz) to the electrical appliance to be classified, measuring the damping in or of the radio field at the trigger frequencies and correlating the frequency dependent damper pattern to a class of the electrical appliances.

## Claims

1. Fastening arrangement, comprising:
- a locking unit (3) and
- a fastening unit (4),
- wherein said locking unit (3) and said fastening unit (4) are adapted to mechanically hold and lock each other, in particular said fastening unit (4) by said locking unit (3), in a first or assembly state or condition and to release each other, in particular said fastening unit (4) from said locking unit (3), in a second or disassembly state or condition,
**characterized in that**
- a radio frequency receiving unit (2) is provided,
- said radio frequency receiving unit (2) is adapted to receive a disassembly radio signal,
- said locking unit (3) and/or said fastening unit (4) are adapted to change from said first or assembly state or condition to said second or disassembly state or condition upon receipt of a disassembly radio signal by said radio frequency receiving unit (2), so as to enable a process of release between said locking unit (3) and said fastening unit (4).

2. Fastening arrangement according to claim 1,
wherein said radio frequency receiving unit (2) at least partly constitutes said locking unit (3).

3. Fastening arrangement according to claim 1,
wherein said radio frequency receiving unit (2) at least partly constitutes said fastening unit (4).

4. Fastening arrangement according to anyone of the preceding claims,
wherein said radio frequency receiving unit (2) is or comprises a resonant circuit, in particular comprising at least a coil and a capacitor.

5. Fastening arrangement according to anyone of the preceding claims,
wherein a process of release between said locking unit (3) and said fastening unit (4) can be enabled by increasing the mobility or movability between said locking unit (3) and said fastening unit (4).

6. Fastening arrangement according to anyone of the preceding claims,
wherein in said first or assembly state or condition said locking unit (3) and said fastening unit (4) are locked to each other at least in part by form closure.

7. Fastening arrangement according to anyone of the preceding claims,
wherein in said first or assembly state or condition said locking unit (3) and said fastening unit (4) are locked to each other at least in part by frictional connection.

8. Fastening arrangement according to anyone of the preceding claims,
wherein a process of release between said locking unit (3) and said fastening unit (4) can be enabled by changing cooperating forms between said locking unit (3) and/or said fastening unit (4).

9. Fastening arrangement according to anyone of the preceding claims,
wherein a process of release between said locking unit (3) and said fastening unit (4) can be enabled by changing ductile and/or elastic properties of said locking unit (3) and/or said fastening unit (4).

10. Fastening arrangement according to anyone of the preceding claims,
wherein heating means is provided for heating said locking unit (3) and said fastening unit (4) upon receipt of said disassembly radio signal.

11. Fastening arrangement according to claim 10,
wherein said heating means is powered by said radio frequency receiving unit (2).

12. Fastening arrangement according to anyone of the claims 10 or 11,
wherein said heating means is a part of said radio frequency receiving unit (2).

13. Fastening arrangement according to anyone of the claims 10 to 12,
wherein said heating means is adapted to realize resistive heating.

14. Fastening arrangement according to anyone of the preceding claims,
wherein a circuit breaker as said locking unit (3) or a part thereof is provided, being capable of interrupting a power input of the fastening arrangement (1) from the disassembly radio signal after release of the fastening unit (4).

15. Fastening arrangement according to anyone of the preceding claims,
wherein said locking unit (3) is adapted for interrupting a current flow through the resonant circuit and for releasing the fastening unit (4) substantially at the same time after said disassembly condition has occurred.

16. Fastening arrangement according to claim 15,
wherein said locking unit (3) is realized by a plug consisting of electrically conductive material.

17. Fastening arrangement according to claim 16,
wherein said plug (3) is removable by the current flow in the radio frequency receiving unit (2).

18. Fastening arrangement according to anyone of the preceding claims,
wherein said radio frequency receiving unit (2) is of a passive type supplied by the received disassembly radio signal.

19. Fastening arrangement according to anyone of the preceding claims,
wherein said radio frequency receiving unit (2) is capable for receiving of radio frequencies in a range of 100MHz to 300 MHz.

20. Fastening arrangement according to anyone of the preceding claims,
- wherein a secure lock unit is provided and
- wherein the secure lock unit is adapted for disables a release of the fastening unit (4) and/or for sensing of the disassembly condition before being unlocked.

21. Article comprising at least a first part (7) and a second part (8),
wherein said first part(7) and said second part (8) are connected by means of at least one fastening arrangement (1),
**characterized in that**
said at least one fastening arrangement (1) is provided as defined in anyone of the claims 1 to 20.

22. Article according to claim 21,
wherein separation units are provided being adapted for pushing apart the first (7) and the second (8) parts of the article after release of the fastening arrangements (1).

23. Article according to claim 22,
wherein at least first and second fastening arrangements (1) are provided, said first fastening arrangement (1) being releasable by a first disassembly radio signal and said second fastening arrangement (1) being releasable by a second disassembly radio signal.

24. Method of releasing a fastening arrangement as defined in anyone of claims 1 to 20, comprising the steps:
- exposing said fastening arrangement (1) to a disassembly radio signal,
- thereby triggering a release between the locking unit (3) and the fastening unit (4) of said fastening arrangement (1).

25. Method of at least partially disassembling an article according to anyone of claims 21 to 23, comprising the steps:
- exposing at least one fastening arrangement (1) of the article to a disassembly radio signal,
- thereby triggering a release of the fastening arrangement (1) and
- at least partially detaching a first part (7) from a second part (8) of said article.

26. Method according to claim 25,
wherein the exposure of said article to the disassembling radio signal forces a separation of the first part (7) and the second part (8) relative to each other.

27. Method according to anyone of the claims 25 or 26,
wherein said article is exposed successively to at least two different disassembly radio signals, wherein a successive disassembly of the article is caused.

28. Method according to anyone of the claims 25 to 27,
wherein the radio frequency receiving unit (2) absorbs in measurable degree power from a disassemble radio signal field as long as the fastening unit (4) is unreleased and absorbs significantly less power after release of the fastening unit (4).

29. Method according to claim 28,
wherein a process of damping of or in the radio field at each disassembly frequency is detected and/or measured and by the result of the detection and/or measurement the proceeding of disassembly is controlled.

30. Method according to claim 29,
wherein a processing step of applying a disassemble radio signal is controlled and/or in particular terminated by detecting and/or measuring an absence of a damping of or in the radio field at the applied disassembly frequency.

31. Method according to anyone of the claims 29 to 30,
wherein the power of the disassemble radio signal is increased as long as the disassemble radio field is damped.

32. Method according to anyone of claims 27 to 31,
- wherein a classifying step is performed,
- wherein the classifying step classifies an article being disassembled or to be disassembled and comprises the steps of
- exposing the article to a disassemble radio signal field of variable frequency,
- varying the frequency of the disassemble radio signal,
- detecting and/or measuring a damping of or in the disassemble radio signal field at a set of probe frequencies and
- relating the pattern of damped and non-damped frequencies of the radio signal field to a class of articles.

33. Method according to claim 32,
wherein the disassembling is controlled by the result of the classifying step.
